# DEMANDE DE BREVET EUROPEEN

(11) **EP 4 491 386 A1**
(43) Date de publication de la demande: **15.01.2025**
(21) Numéro de dépôt: 24187364.5
(22) Date de dépôt: 09.07.2024
(51) Int. Cl.: B32B 5/02, A47C 7/26, B32B 5/06, B32B 5/26, B32B 7/12

(54) **MATÉRIAU DE PROTECTION CONTRE LE FEU ET CONTRE LE VANDALISME**

(30) Priorité: 13.07.2023 FR 2307572
(71) Demandeur: Duflot Industrie, (S.A), 59540 Caudry (FR)
(72) Inventeur: DELEFORTRIE, Marie, 59540 CAUDRY (FR)
(74) Mandataire: Cabinet Beau de Loménie

(57) **Abrégé**

La présente invention concerne un matériau de protection (10,340) contre le vandalisme et contre le feu comprenant une couche de renfort métallique (20) disposée entre une première couche barrière au feu de fibres non-tissées (30) et une seconde couche barrière au feu de fibres non-tissées (40), la couche de renfort métallique (20) est un renfort métallique tricoté (20) comprenant un ou des fil(s) métallique(s) monofilamentaire(s) ayant un diamètre inférieur ou égal à 0,25 mm.

La présente invention concerne également un procédé de fabrication d'un tel matériau de protection (10,340), et l'utilisation dudit matériau de protection (10,340).

## Description

### Domaine Technique

La présente invention concerne le domaine technique des matériaux anti-vandalisme et anti-feu, et les procédés de fabrication de tels matériaux.

### Technique antérieure

Les garnitures des zones d'accueil des passagers (sièges, appui-têtes, accoudoirs, dossiers..) mises en oeuvre dans les transports collectifs de passagers doivent répondre à des exigences de sécurité sévères concernant la protection au feu. Cette attente est particulièrement accrue dans le domaine du ferroviaire, ou encore des transports type métro, tramway, bus.

Les garnitures desdites zones d'accueil sont ainsi soumises à des tests de résistance au feu critiques qui nécessitent l'utilisation de matériaux barrières au feu. Ces barrières au feu protègent la mousse des garnitures dites zones d'accueil, la mousse étant un composant essentiel apportant le confort à l'usager durant la durée de son trajet. Ces barrières assurent la conformité aux exigences de comportement au feu énoncées dans différentes normes en vigueur, en particulier dans la norme NF EN 45545-2, notamment datant d'août 2020, intitulée « Applications ferroviaires - Protection contre les incendies dans les véhicules ferroviaires - Partie 2 : Exigences du comportement au feu des matériaux et des composants ».

Il a été observé cependant une augmentation des actes de vandalisme dans les transports collectifs, en particulier dans le domaine ferroviaire. Les couches extérieures des garnitures sont ainsi lacérées, mettant à nu la mousse qui est sensible au feu. Dans cette situation, la sécurité des passagers n'est plus assurée face aux risques d'incendies.

Les matériaux anti-vandalisme sont généralement déployés dans des sièges utilisés dans des conditions critiques comme le transport en RER ou de manière générale le transport ferroviaire permettant le déplacement intra-métropoles.

Ces matériaux sont notamment évalués à l'aide de la norme NF F31-118, notamment datant de décembre 2013, (intitulée « Matériel roulant ferroviaire - Revêtement anti-vandalisme - Caractéristiques et essais) définissant les critères de résistance aux actes de vandalisme des matériaux, notamment des revêtements, mis en oeuvre dans les garnitures des zones d'accueil (siège,...). Cette norme est très exigeante quant aux performances de résistance à la lacération et d'adhérence entre les différentes couches composant le garnissage d'un siège. Les matériaux satisfaisants cette norme à ce jour sont rigides ce qui génère des difficultés de confection et diminue considérablement le confort du siège.

Ce type de matériaux n'est pas adapté à un usage prolongé, par exemple pour de longs trajets en TGV. Ces matériaux rigides comprennent généralement un renfort métallique assurant la résistance contre la lacération, et peuvent être combiné avec une barrière au feu ce qui augmente encore le poids et la rigidité.

Afin de répondre aux attentes de garnitures de zones d'accueil, notamment de sièges, anti-vandalisme et anti-feu, pour les transports collectifs, en particulier dans le domaine ferroviaire, la norme EN 45 545-2 a été révisée en 2020 afin d'intégrer désormais une évaluation du potentiel des revêtements de sièges à résister aux actes de vandalisme énoncée dans la norme NF EN 16989, Annexe A, notamment datant de juin 2018, intitulée « Applications ferroviaires - Protection contre les incendies dans les véhicules ferroviaires- Essais de comportement au feu de siège complet » (cette norme décrit un protocole d'essai permettant de déterminer le comportement au feu d'une conception de siège de véhicule ferroviaire en utilisant un jeu de sièges complets préparés et soumis à essai conformément aux procédures indiquées dans ladite norme. Il établit également une procédure normalisée pour évaluer le potentiel d'un siège à résister aux actes de vandalisme).

Cependant, l'association d'un matériau anti-vandalisme avec un matériau anti-feu résulte en un matériau qui est rigide, difficile à mettre en oeuvre lors de sa confection, et inconfortable. De plus, sa masse surfacique est élevée, or il est recherché dans tout transport de limiter également le poids embarqué afin de diminuer la consommation d'énergie.

Il existe donc un besoin pour un matériau anti-feu et anti-vandalisme qui soit léger, souple, qui puisse être confectionné et transformé facilement, et enfin confortable.

Il existe un besoin pour un matériau anti-feu et anti-vandalisme capable de satisfaire la norme EN 45 546-2, révisée en 2020, et en particulier son volet anti-vandalisme énoncée notamment dans la norme NF EN 16989, Annexe A.

### Exposé de l'invention

La présente invention a pour objet un matériau de protection contre le vandalisme et contre le feu palliant tout ou partie des problèmes précités en ce qu'il comprend, éventuellement est constitué essentiellement de, une couche de renfort métallique disposée entre une première couche barrière au feu de fibres non-tissées et une seconde couche barrière au feu de fibres non-tissées, la couche de renfort métallique est un renfort métallique tricoté comprenant, notamment est constitué essentiellement de, un ou des fil(s) métallique(s) monofilamentaire(s) ayant (chacun) un diamètre inférieur ou égal à 0,25 mm.

Avantageusement, le renfort métallique comprend des fils métalliques tricotés qui sont très fins ce qui améliore la souplesse dudit renfort.

Le tricotage permet également d'améliorer considérablement la souplesse en combinaison avec la finesse des fils. En effet, dans un mode de liage par tricotage, les boucles maillées glissent les unes par rapport aux autres. Cette liberté de mouvement entre les fils, en particulier fins, confère une bonne souplesse au renfort métallique. De plus ce mode de liage pour les fils métalliques combiné avec deux couches de fibres non-tissées barrières au feu permet de conférer une bonne résistance à la lacération au matériau selon l'invention.

De préférence, le matériau selon l'invention peut être utilisé dans toutes les catégories de véhicules ferroviaires, que ce soit pour des trajets courts (par exemple de quelques minutes) ou des trajets longs (par exemple de plusieurs heures sur un TGV), ou encore dans des véhicules de transport collectifs, notamment de manière non exhaustive dans les bus, les tramways, les métros, ....

De préférence, le renfort métallique tricoté comprend des mailles jersey.

De préférence, le renfort métallique tricoté comprend des mailles cueillies, en particulier le renfort métallique est un tricot à mailles cueillies.

De préférence, le renfort métallique tricoté ne comprend pas de mailles jetées, en particulier n'est pas un tricot à mailles jetées. De préférence, le renfort métallique tricoté comprend un nombre de rangées de mailles compris entre 0,5 et 5 par 2,5 mm, encore de préférence compris entre 0,5 et 3 par 2,5 mm, en particulier d'environ 1 à +/- 0,5 par 2,5 mm. Le nombre de rangées de mailles est mesuré dans le sens des colonnes de mailles du renfort métallique tricoté.

De préférence, le renfort métallique tricoté comprend, notamment est constitué essentiellement de, un ou plusieurs fil(s) tricoté(s) dans un métal ou un alliage de ce dernier, ledit métal étant choisi parmi : l'acier inoxydable, le cuivre, l'aluminium, le fer, en particulier en acier inoxydable.

Cette disposition permet d'améliorer la résistance à la corrosion du matériau selon l'invention. En effet, le siège comprenant ledit matériau est généralement nettoyé régulièrement à la vapeur d'eau.

Avantageusement, le tricotage d'un renfort métallique à partir de fil(s) monofilamentaire(s) de faible diamètre est difficile à effectuer sur un métier à tricoter. De plus, le renfort métallique à partir de tels fils a tendance à se déformer davantage du fait de sa finesse et de sa faible masse surfacique au détriment de ses propriétés mécaniques. La personne du métier n'est donc pas incitée à utiliser ce type de renfort métallique. Néanmoins, il a été trouvé de manière étonnante que ce type de renfort métallique en combinaison avec des première et seconde couches barrières au feu permet d'obtenir un matériau de protection ayant de bonnes performances contre le vandalisme tout en étant souple.

De préférence, la première couche barrière au feu de fibres non-tissées, et éventuellement la seconde couche barrière au feu de fibres non-tissées, peut/peuvent être (chacune) une nappe de fibres cardées, ou de fibres réunies et enchevêtrées par un flux d'air (notamment par la technique dite de airlaid), ou encore réunies et enchevêtrées par un jet d'eau (notamment par la technique dite de wetlaid), de préférence il s'agit d'une nappe de fibres cardées.

Encore de préférence, ladite nappe de fibres est consolidée par aiguilletage ou hydroliage. Ces techniques consistent à disposer des fibres de la nappe dans un plan perpendiculaire au plan x-y du matériau selon l'invention.

Avantageusement, la première couche barrière au feu de fibres non-tissées, et éventuellement la seconde couche barrière au feu de fibres non-tissées, est/sont chacune une nappe de fibres non-tissées aiguilletées et/ou hydroliées.

De préférence, la première couche barrière au feu de fibres non-tissées a un taux de consolidation supérieur ou égal à 20 coups/cm² et inférieur ou égal à 200 coups/cm², en particulier un taux de consolidation supérieur ou égal à 45 coups/cm².

De préférence, la seconde barrière au feu de fibres non-tissées a un taux de consolidation supérieur ou égal à 20 coups/cm² et inférieur ou égal à 200 coups/cm², en particulier un taux de consolidation supérieur ou égal à 45 coups/cm².

Dans des exemples préférés, la première couche barrière au feu, et éventuellement la seconde couche barrière au feu de fibres non-tissées, comprend/comprennent chacune des fibres, notamment en aramide, ayant une masse linéique supérieure ou égale à 0,5 dtex ou à 0,9 dtex et inférieure ou égale à 5 dtex ou à 3 dtex ou à 2,5 dtex.

Les inventeurs ont observé que cet intervalle de masse linéique améliore la résistance à la lacération du matériau selon l'invention.

Dans des modes de réalisation, la première couche barrière au feu, et éventuellement la seconde couche barrière au feu, est/sont chacune une nappe de fibres comprenant des fibres orientées dans un plan x-y du matériau de protection et comprenant des fibres orientées dans un plan perpendiculaire au plan x-y du matériau de protection.

Dans des modes de réalisation, le matériau de protection a une épaisseur inférieure ou égale à 10 mm, en particulier inférieure ou égale à 8 mm, plus particulièrement inférieure ou égale à 6 mm, encore plus particulièrement inférieure ou égale à 4 mm, notamment mesurée sous un poids appliqué audit matériau de protection de 0,5 KPa.

En particulier, le matériau de protection a une épaisseur supérieure ou égale à 0,5 mm, plus particulièrement supérieure ou égale à 1 mm, par exemple de 3 mm à +/-2 mm près, notamment sous un poids appliqué audit matériau de protection de 0,5 KPa.

Avantageusement, le matériau de protection comprend une première face et une seconde face, sensiblement opposées à la première face.

Avantageusement, ladite épaisseur est la distance entre la première face et la seconde face du matériau de protection.

Dans des modes de réalisation, la première couche de barrière au feu de fibres non-tissées, et éventuellement la seconde couche barrière au feu de fibres non-tissées, comprend/comprennent chacune, en particulier est/sont constituée(s) essentiellement de, fibres thermostables.

On comprend dans le présent texte par fibre thermostable, toute fibre intrinsèquement dont la température d'utilisation est supérieure ou égale à 300°C, en particulier supérieure ou égale à 400°C, sans dégradation de ses propriétés mécaniques.

Dans des modes de réalisation, la première couche barrière au feu, et éventuellement la seconde couche barrière au feu, comprend/comprennent chacune des fibres choisies parmi : des fibres en polyéthylène à très haut poids moléculaire (UHMWPE), des fibres en polyacrylate, des fibres en polyacrylonitrile (PAN) préoxydées, des fibres en viscose, notamment ignifugées, des fibres en laine, des fibres en aramide, en particulier des fibres en para-aramide et/ou des fibres en méta-aramide, ou un mélange de ces dernières.

Dans des modes de réalisation, la première couche barrière au feu, et éventuellement la seconde couche barrière au feu, comprend/comprennent chacune au moins 60% en masse, de préférence au moins 70% en masse, encore de préférence au moins 80% en masse, de fibres en para-aramide et/ou de fibres en méta-aramide, ou un mélange de ces dernières.

Dans des modes de réalisation, la première couche barrière au feu, et éventuellement la seconde couche barrière au feu, comprend/comprennent chacune au moins 5% en masse, de préférence au moins 10% en masse, encore de préférence au plus 20% en masse, de fibres en para-aramide et/ou de fibres en méta-aramide, ou un mélange de ces dernières de fibres en viscose, notamment ignifugées, et/ou de fibres en polyacrylonitrile (PAN).

Dans des modes de réalisation, le renfort métallique tricoté comprend, en particulier est constitué de, un ou plusieurs fil(s) métallique(s) monofilamentaire(s) ayant chacun un diamètre supérieur ou égal à 0,05 mm, en particulier supérieur ou égal à 0,08 mm, plus particulièrement supérieur ou égal à 0,10 mm.

Dans des modes de réalisation, le renfort métallique tricoté comprend, en particulier est constitué de, un ou plusieurs fil(s) métallique(s) monofilamentaire(s) ayant chacun un diamètre inférieur ou égal à 0,20 mm.

Le(s) fil(s) utilisé(s) dans le renfort métallique tricoté est/sont très fin(s) de sorte que le tricot conserve une souplesse suffisante évitant une rigidification et donc une perte de confort importante du siège.

Si le(s) fil(s) est/sont trop fin(s), on observe une diminution de la performance au test de lacération exigée comme devant être inférieure à 50 mm.

Avantageusement, la première couche barrière au feu comprend des faces interne et externe sensiblement opposées.

Avantageusement, la seconde barrière au feu comprend des faces interne et externe sensiblement opposées.

Avantageusement, le renfort métallique tricoté comprend des première et seconde faces sensiblement opposées, ladite première face étant orientée en regard de la face interne de la première couche barrière au feu et ladite seconde face étant orientée en regard de la face interne de la seconde couche barrière au feu.

On comprend dans le présent texte par le matériau de protection contre le vandalisme et contre le feu est constitué essentiellement d'une couche de renfort métallique disposée entre une première couche barrière au feu de fibres non-tissées et une seconde couche barrière au feu de fibres non-tissées que lesdites première et seconde couches barrières au feu et ledit renfort métallique représentent au moins 80% en masse, de préférence au moins 90% en masse, encore de préférence au moins 95% en masse, dudit matériau de protection.

On comprend dans le présent texte par le renfort métallique est constitué essentiellement d'un ou de fil(s) métallique(s) monofilamentaire(s) que le ou lesdits fil(s) métallique(s) monofilamentaire(s) ayant (chacun) un diamètre inférieur ou égal à 0,25 mm, représente(nt) au moins 80% en masse, de préférence au moins 90%, encore de préférence au moins 95% en masse, dudit renfort métallique.

On comprend dans le présent texte par un intervalle donné comme étant défini comme compris entre a et b que les bornes a et b sont incluses dans ledit intervalle. Dans une variante de réalisation, le matériau de protection a une masse surfacique totale supérieure ou égale à 100 g/m² et inférieure ou égale à 600 g/m².

De préférence, le matériau de protection a une masse surfacique supérieure ou égale à 120 g/m², encore de préférence supérieure ou égale à 130 g/m², préférentiellement supérieure ou égale à 140 g/m², encore préférentiellement supérieure ou égale à 150 g/m².

De préférence, le matériau de protection a une masse surfacique inférieure ou égale à 500 g/m², encore de préférence inférieure ou égale à 400 g/m², préférentiellement inférieure ou égale à 350 g/m², encore préférentiellement inférieure ou égale à 300g/m².

Dans des exemples, le matériau de protection a une masse surfacique supérieure ou égale à 200 g/m² et inférieure ou égale à 350 g/m².

Le matériau de protection selon l'invention satisfait les critères de résistance au feu et à la lacération, en particulier énoncés dans la norme EN 45 546-2, révisée en 2020, et son volet anti-vandalisme énoncé dans la norme NF EN 16989, Annexe A, et ce tout en ayant une masse surfacique faible ce qui permet d'obtenir un matériau de protection souple, confortable et qui peut être cousu lors de la confection d'un siège par exemple.

Dans une variante de réalisation, le renfort métallique tricoté comprend un ou plusieurs fil(s) métallique(s) monofilamentaire(s) ayant chacun un diamètre inférieur ou égal à 0,20 mm, de préférence inférieur ou égal à 0,15 mm.

Dans une variante de réalisation, le renfort métallique tricoté a une masse surfacique supérieure ou égale à 30 g/m² et inférieure ou égale à 280 g/m², de préférence inférieur ou égal à 200 g/m², encore de préférence inférieure ou égale à 150 g/m². Dans des modes de réalisation, le renfort métallique tricoté a une masse surfacique supérieure ou égale à 50 g/m², en particulier supérieure ou égale à 70 g/m².

Dans des modes de réalisation, le renfort métallique tricoté a une masse surfacique inférieure ou égale à 120 g/m², en particulier inférieure ou égale à 100 g/m², plus particulièrement inférieure ou égale à 90 g/m².

Dans une variante de réalisation, le renfort métallique tricoté a un nombre de colonnes de mailles par 25,4 mm inférieur ou égal à 10.

Dans des modes de réalisation, le renfort métallique tricoté a un nombre de colonnes de mailles par 25,4 mm supérieur ou égal à 2, de préférence supérieur ou égal à 3, encore de préférence supérieur ou égal à 3,5.

Dans des modes de réalisation, le renfort métallique tricoté a un nombre de colonnes de mailles par 25,4 mm inférieur ou égal à 8, plus particulièrement inférieur ou égal à 7, encore plus particulièrement inférieur ou égal à 5,5.

Il a été trouvé que plus le nombre de colonnes de mailles par pouce (soit 25,4 mm) est faible, et ce combiné avec un/des fil(s) fin(s), plus le renfort métallique tricoté est souple et flexible, et notamment permet de confectionner un produit final confortable, tel qu'un siège.

Un nombre de colonnes de mailles supérieur ou égal à 2 par 25,4 mm permet de conserver une bonne résistance à la lacération.

Dans une variante de réalisation, le renfort métallique tricoté comprend, notamment est constitué essentiellement de, des mailles dont chacune comprend de un à huit fil(s) métallique(s) monofilamentaire(s), en particulier de un à quatre fil(s) métallique(s) monofilamentaire(s), plus particulièrement de un à trois fil(s) métalliques monofilamentaire(s), notamment d'un fil métallique monofilamentaire. Cette disposition permet encore d'améliorer la souplesse et la flexibilité du matériau de protection.

Avantageusement, lors du tricotage du renfort métallique, des aiguilles du métier à tricoter sont chacune alimentées par un à quatre fil(s) métallique(s) monofilamentaire(s), plus particulièrement par un à trois fil(s) métalliques monofilamentaire(s), notamment par un fil métallique monofilamentaire.

Dans des modes de réalisation, le renfort métallique tricoté comprend des mailles, notamment est constitué de, dont chacune comprend un fil métallique monofilamentaire.

Cette disposition permet d'apporter de la souplesse au renfort métallique tricoté.

Dans une variante de réalisation, la première couche barrière au feu comprend au moins 60% en masse, en particulier au moins 70% en masse, plus particulièrement au moins 80% en masse, encore plus particulièrement au moins 90% en masse, de fibres non-tissées thermostables.

Dans des modes de réalisation, la seconde couche barrière au feu comprend au moins 60% en masse, en particulier au moins 70% en masse, plus particulièrement au moins 80% en masse, encore plus particulièrement au moins 90% en masse, de fibres non-tissées thermostables.

Le % massique en fibres thermostables est calculé par rapport à la masse totale de la première, respectivement seconde, couche barrière au feu.

On comprend dans le présent texte par fibres thermostables des fibres ayant de bonnes propriétés intrinsèques de résistance au feu, en particulier dont les propriétés mécaniques (exemple résistance à la rupture (daN)) sont conservées à une température d'utilisation supérieure ou égale à 300°C ou à 350°C ou à 400°C. Dans une variante de réalisation, la première couche barrière au feu comprend au moins 60% en masse, en particulier au moins 70% en masse, plus particulièrement au moins 80% en masse, encore plus particulièrement au moins 90% en masse, de fibres en aramide, notamment en méta-aramide.

Dans des modes de réalisation, la seconde couche barrière au feu comprend au moins 60% en masse, en particulier au moins 70% en masse, plus particulièrement au moins 80% en masse, encore plus particulièrement au moins 90% en masse, de fibres en aramide, notamment en méta-aramide.

Dans des modes de réalisation, la première couche barrière au feu comprend au moins 5% en masse de fibres en para-aramide, et au plus 40% en masse de fibres en para-aramide, en particulier au plus 30% ou 20% en masse de fibres en para-aramide.

Dans des modes de réalisation, la seconde couche barrière au feu comprend au moins 5% en masse de fibres en para-aramide, et au plus 40% en masse de fibres en para-aramide, en particulier au plus 30% ou 20% en masse de fibres en para-aramide.

Dans des modes de réalisation, la première couche barrière au feu comprend au moins 60% en masse de fibres en méta-aramide, et au plus 95% en masse de fibres en méta-aramide, en particulier au plus 80% ou 70% en masse de fibres en méta-aramide.

Dans des modes de réalisation, la seconde couche barrière au feu comprend au moins 60% en masse de fibres en méta-aramide, et au plus 95% en masse de fibres en méta-aramide, en particulier au plus 80% ou 70% en masse de fibres en méta-aramide.

Le % massique de fibres en (para/méta) aramide est calculé par rapport à la masse totale de la première, respectivement seconde, couche barrière au feu.

Le mélange de fibres en para-aramide avec des fibres en méta-aramide permet d'améliorer les performances de résistance au feu et de résistance à la lacération. En effet, les fibres en para-aramide apportent une bonne résistance à la lacération et une bonne résistance au feu en combinaison avec les fibres en méta-aramide ayant une bonne résistance au feu.

Dans une variante de réalisation, la première couche barrière au feu à une masse volumique supérieure ou égale à 20 Kg/m³ et inférieure ou égale à 200 Kg/m³.

Dans des modes de réalisation, la première couche barrière au feu a une masse volumique supérieure ou égale à 20 Kg/m³ et inférieure ou égale à 100 Kg/m³, de préférence supérieure ou égale à 25 Kg/m³ et inférieure ou égale à 70 Kg/m³, en particulier supérieure ou égale à 25 Kg/m³ et inférieure ou égale à 60 Kg/m³.

Dans des modes de réalisation, la seconde couche barrière au feu à une masse volumique supérieure ou égale à 20 Kg/m³ et inférieure ou égale à 200 Kg/m³.

Dans des modes de réalisation, la seconde couche barrière au feu a une masse volumique supérieure ou égale à 20 Kg/m³ et inférieure ou égale à 100 Kg/m³, de préférence supérieure ou égale à 25 Kg/m³ et inférieure ou égale à 70 Kg/m³, en particulier supérieure ou égale à 25 Kg/m³ et inférieure ou égale à 60 Kg/m³.

Dans un exemple préféré, la première couche barrière au feu, et/ou la seconde couche barrière au feu, a (ont chacune) une masse volumique supérieure ou égale à 25 Kg/m³ et inférieure ou égale à 45 Kg/ m³, en particulier pour une épaisseur supérieure ou égale à 0,5 mm et inférieure ou égale à 5 mm, plus particulièrement inférieure ou égale à 3 mm.

Ces intervalles de masses volumiques permettent d'obtenir une bonne résistance à la lacération.

Ces intervalles de masses volumiques s'appliquent de préférence à la première couche barrière au feu et/ou à la seconde couche barrière au feu après aiguilletage, et avant assemblage avec le renfort métallique.

Dans une variante de réalisation, la première couche barrière au feu, et/ou la seconde couche barrière au feu, a (ont chacune) une épaisseur inférieure ou égale à 6 mm, de préférence inférieure ou égale à 4 mm, préférentiellement inférieure ou égale à 3 mm.

En particulier, la première couche barrière au feu, et/ou la seconde couche barrière au feu, a (ont chacune) une épaisseur supérieure ou égale à 0,5 mm, par exemple de l'ordre de 2 mm à +/- 0,5 mm près.

Dans une variante de réalisation, la première couche barrière au feu, et/ou la seconde couche barrière au feu, a (ont chacune) une masse surfacique supérieure ou égale à 40 g/m² et inférieure ou égale à 200 g/m², de préférence inférieure ou égale à 150 g/m², encore de préférence inférieure ou égale à 130 g/m², préférentiellement inférieure ou égale à 100 g/m².

Dans un exemple préféré, la première couche barrière au feu, et/ou la seconde couche barrière au feu, a (ont chacune) une masse surfacique supérieure ou égale à 50 g/m² et inférieure ou égale à 100 g/m², en particulier supérieure ou égale à 60 g/m² et inférieure ou égale à 90 g/m², par exemple de 70 g/m² à +/- 10 g/m². Dans une variante de réalisation, la première couche barrière au feu comprend des fibres, notamment thermostables et/ou en aramide, ayant une longueur supérieure ou égale à 30 mm, en particulier supérieur ou égale à 35 mm, et inférieure ou égale à 100 mm, et une masse linéique inférieure ou égale à 10 dtex.

Dans des modes de réalisation, la première couche barrière au feu comprend des fibres, notamment thermostables et/ou en aramide, ayant une masse linéique supérieure ou égale à 0,5 dtex, en particulier supérieur ou égal à 1,5 dtex.

Dans des modes de réalisation, la seconde couche barrière au feu comprend des fibres, notamment thermostables et/ou en aramide, ayant une longueur supérieure ou égale à 30 mm, en particulier supérieur ou égale à 35 mm, et inférieure ou égale à 100 mm, et une masse linéique inférieure ou égale à 10 dtex.

Dans des modes de réalisation, la seconde couche barrière au feu comprend des fibres, notamment thermostables et/ou en aramide, ayant une masse linéique supérieure ou égale à 0,5 dtex, en particulier supérieur ou égal à 1,5 dtex.

Il a été déterminé que cette combinaison de paramètres permet d'améliorer la résistance à la délamination du matériau de protection.

Dans une variante de réalisation, les première et seconde couches barrières au feu sont chacune une nappe de fibres non-tissées comprenant au moins 70% en masse de fibres en aramide, ladite nappe ayant une masse surfacique supérieure ou égale à 60 g/m² et inférieure ou égale à 100 g/m², en particulier inférieure ou égale à 80 g/m², le renfort métallique tricoté a une masse surfacique supérieure ou égale à 50 g/m², en particulier supérieure ou égale à 70 g/m², et inférieure ou égale à 120 g/m², en particulier inférieure ou égale à 90 g/m², et comprend au moins un fil métallique monofilamentaire ayant un diamètre inférieur ou égal à 0,25 mm, ledit renfort métallique tricoté comprenant un nombre de colonnes de mailles inférieur ou égal à 8 par 25,4 mm.

Dans des modes de réalisation, la première couche barrière au feu, et éventuellement la seconde couche barrière au feu, a/ont chacune une masse volumique allant de 25 Kg/m³ à 45 Kg/ m³.

Dans une variante de réalisation, les première et seconde couches barrières au feu sont solidarisées au renfort métallique tricoté par au moins l'un des moyens suivants : par un agent adhésif, par un fil de liaison, en particulier ayant un numérométrique (Nm) allant de 15 à 40, par des fibres de la première couche barrière au feu et/ou des fibres de la seconde couche barrière au feu enchevêtrées dans ledit renfort métallique tricoté, par exemple par aiguilletage ou hydroliage, pour former un matériau monolithique.

Avantageusement, ledit matériau est monolithique et forme un panneau ayant une bonne résistance à la délamination.

De préférence, le renfort métallique tricoté est disposé entre les première et seconde couches barrières au feu.

Dans des modes de réalisation, les première et seconde couches barrières au feu sont solidarisées par l'intermédiaire d'un agent adhésif au renfort métallique tricoté. Ledit agent adhésif peut être pulvérisé sur la ou les face(s) interne(s) de la première et/ou seconde couche(s) barrière(s) au feu et/ou sur la ou les première et/ou seconde face(s) du renfort métallique tricoté, et/ou un voile de colle hotmelt disposé de part et d'autre du renfort métallique tricoté.

Dans des modes de réalisation, les première et seconde couches barrières au feu et le renfort métallique tricoté sont aiguilletés ensemble ou hydroliés ensemble.

Dans des modes de réalisation, les première et seconde couches barrières au feu et le renfort métallique tricoté sont assemblés par un fil tricoté à travers lesdites couches et le dit renfort.

Dans des modes de réalisation, un ou plusieurs de fil(s) de liaison est/sont cousu(s) à travers la première couche barrière au feu, éventuellement la seconde barrière au feu, et le renfort métallique tricoté.

Dans des modes de réalisation, des fibres de la première couche barrière au feu, et éventuellement des fibres de la seconde couche barrière au feu, s'étendent à travers le renfort métallique tricoté, en particulier dans un plan perpendiculaire au plan x-y du matériau de protection.

La présente invention a pour objet, selon un second aspect, un procédé de fabrication d'un matériau de protection contre le vandalisme et contre le feu, en particulier selon l'une quelconque des variantes de réalisation en référence au premier aspect de l'invention, comprenant les étapes :
- on dispose un renfort métallique tricoté entre des première et secondes couches barrières au feu en fibres non-tissées, ledit renfort métallique tricoté comprenant un ou des fil(s) métallique(s) monofilamentaire(s), le ou lesdits fil(s) métallique(s) monofilamentaire(s) ayant un diamètre inférieur ou égal à 0,25 mm;
- on solidarise les première et seconde couches barrières au feu audit renfort métallique tricoté avec au moins l'un des moyens suivants : un agent adhésif pulvérisé, un film hotmelt activé par chauffage, un fil de solidarisation cousu, par hydroliage, ou une combinaison de ces derniers.

La présente invention a pour objet, selon un troisième aspect, l'utilisation du matériau de protection contre le feu et contre le vandalisme selon l'une quelconque des variantes de réalisation selon un premier aspect de l'invention pour la fabrication d'un siège (en particulier l'une au moins des zones suivantes du siège comprend le matériau de protection selon un premier ou second aspect de l'invention : une zone assise et/ou une zone de dossier et/ou une zone de repose tête et/ou une zone d'accoudoir), notamment pour un moyen de transport collectif, par exemple un train, un bus, un métro ou un tramway, ledit siège comprenant dans cet ordre : un revêtement extérieur, ledit matériau de protection contre le feu et contre le vandalisme, et au moins une couche de mousse. Avantageusement, ledit renfort métallique tricoté, dudit matériau de protection contre le feu et contre le vandalisme, comprend une face envers, en particulier comprenant des mailles envers, et une face endroit, en particulier comprenant des mailles endroits, et la face endroit du renfort métallique tricoté est orientée en regard du revêtement extérieur, et la face envers du renfort métallique est orientée en regard de ladite au moins une couche de mousse.

De préférence, l'une au moins des zones suivantes du siège choisie une zone assise et/ou une zone de dossier et/ou une zone de repose tête et/ou une zone d'accoudoir comprend le matériau de protection. Il a été trouvé de façon surprenante que la disposition des mailles endroits en regard du revêtement extérieur, et donc en regard de l'amorce de la lacération, améliore la résistance à la lacération du matériau de protection et donc du siège.

De préférence, la face envers du renfort métallique tricoté comprend des mailles cueillies envers, en particulier des mailles jersey envers.

De préférence, la face endroit du renfort métallique tricoté comprend des mailles cueillies endroits, en particulier des mailles jersey endroits.

Avantageusement, les mailles cueillies envers sont des pieds de maille. Avantageusement, les mailles cueillies endroits sont des têtes de mailles (forme de la maille en « V »).

### Description des dessins

La présente invention sera mieux comprise à la lecture des modes de réalisation suivants, cités à titre non limitatif, et illustrés par les figures dans lesquelles :
[Fig.1] la figure 1 représente schématiquement vue de côté et éclatée un premier exemple de matériau de protection contre le feu et contre le vandalisme selon l'invention ;
[Fig.2] la figure 2 représente schématiquement un premier exemple d'un siège en coupe comprenant un premier exemple de matériau de protection contre le feu et contre le vandalisme selon l'invention ;
[Fig.3] la figure 3 représente schématiquement un test comparant la souplesse entre le premier exemple de matériau de protection 10 représenté à la figure 2, un exemple comparatif d'une barrière au feu 100 et un exemple de nappe anti-vandalisme 200.

### Description détaillée

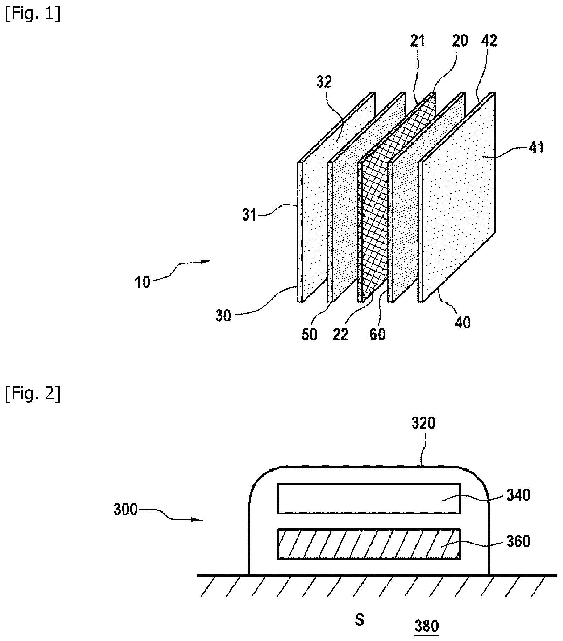

Le premier exemple de matériau de protection contre le vandalisme et contre le feu 10 représenté à la figure 1 comprend avantageusement un renfort métallique tricoté 20 disposée entre une première couche barrière au feu de fibres non-tissées 30 et une seconde couche barrière au feu de fibres non-tissées 40.

Dans un exemple précis, le renfort métallique 20 est un renfort métallique tricoté à mailles jersey dont chacune maille est formée avec un fil métallique monofilamentaire, en particulier en acier inoxydable, ayant un diamètre de l'ordre de 0,10 mm. Le nombre de colonnes de mailles par 25,4 mm (soit un pouce anglais) est de préférence compris entre 3,5 et 5,5, encore de préférence de l'ordre de 4,5. Dans un exemple précis, la première couche barrière au feu 30 et la seconde couche barrière au feu 40 sont chacune une nappe de fibres non-tissées et aiguilletées d'environ 70 g/m² constituée essentiellement de fibres en aramide, en particulier de 70% à 95% en masse de fibres de méta-aramides et de 5% à 30% en masse de fibres en para-aramide.

Dans un exemple précis, la première couche barrière au feu 30 et la seconde couche barrière au feu 40 sont chacune une nappe de fibres non-tissées et aiguilletées ayant une épaisseur d'environ 2 mm et une densité d'environ 35 Kg/m³.

Dans un exemple précis, la première couche barrière au feu 30 et la seconde couche barrière au feu 40 sont chacune une nappe de fibres non-tissées et aiguilletées comprennent des fibres ayant une longueur comprise entre 30 mm et 100 mm, par exemple de l'ordre de 60 mm, pour au moins 70% en masse desdites fibres. Avantageusement, la première couche barrière au feu 30 comprend une face externe 31 et une face interne 32, la seconde couche barrière au feu 40 comprend une face externe 41 et une face interne 42, et enfin la couche de renfort métallique tricoté 20 comprend une première face 21 et une seconde face 22.

Tel que cela est visible sur la figure 1, la première face 21 du renfort métallique 20 est disposée en regard de la face interne 32 de la première couche barrière au feu 30 et la seconde face 22 du renfort métallique 20 est disposée en regard de la face interne 42 de la seconde couche barrière au feu 40.

Avantageusement, le matériau 10 est monolithique, car les différentes couches (20,30,40) sont solidarisées entre-elles avec une bonne résistance au délaminage.

Dans l'exemple de réalisation illustré à la figure 1, les différentes couches (20,30,40) sont solidarisées entre-elle par un agent adhésif, dans cet exemple précis deux voiles de colle thermofusible 50 et 60 sont disposés de part et d'autre de la couche de renfort métallique tricoté 20, entre la face interne 32 et la première face 21 d'une part et entre la face interne 42 et la seconde surface 22 d'autre part.

Dans un exemple précis, les voiles de colle thermofusible 50 et 60 sont chacun un voile de colle en copolyamide d'environ 12 g/m².

L'ensemble des couches 20,30,40 avec les voiles de colle 50 et 60 est calandré à chaud afin de compacter lesdites couches et les solidariser entre-elles.

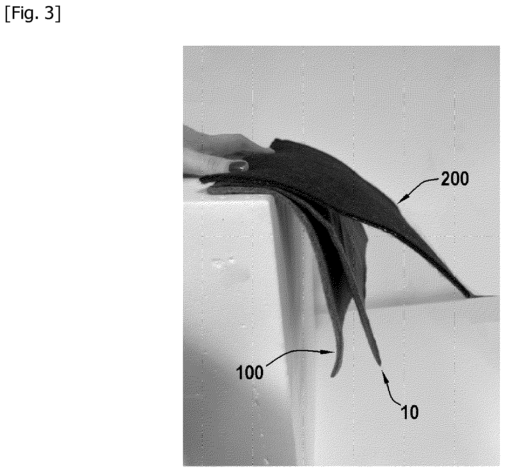

Le matériau de protection 10 obtenu avec les différents paramètres précis énoncés ci-dessus a une masse surfacique de l'ordre de 230 g/m², et une épaisseur de l'ordre de 3 mm sous une charge de 0,5 KPa. Le matériau de protection 10 a un résultat au test de lacération (selon la norme EN 16989 précitée) inférieur à 10 mm contre un résultat supérieur à 50 mm, par exemple de l'ordre 55 mm, pour une barrière au feu standard comparative (250g/m² d'une nappe cardée et aiguilletée de fibres non-tissés de 88% en masse de méta-aramide et 12% en masse de para-aramide, épaisseur de 4 mm sous une charge de 0,5 KPa) 100. La barrière au feu comparative 100 a ainsi une mauvaise résistance à la lacération mais présente cependant une bonne souplesse telle que cela est illustrée à la figure 3. Sur la figure 3, on remarque que la barrière au feu comparative 100 épouse davantage la surface sur laquelle il est posé.

Le renfort métallique tricoté 20 permet avantageusement de freiner la lame lors du test. La figure 3 représente également une nappe anti-vandalisme comparative 200 (1050g/m², un renfort métallique tricoté de 450 g/m² environ comprenant des fils métalliques monofilamentaires de 0,35 mm de diamètre est disposée entre deux nappes cardées et aiguilletées de fibres en aramide, chaque nappe ayant une masse surfacique d'environ 300 g/m², épaisseur de 3,8 mm sous une charge de 0,5 KPa). La résistance à la lacération est bonne puisque la valeur obtenue au test est de 0 mm, cependant la nappe anti-vandalisme 200 est très rigide et lourde. On remarque clairement sur la figure 3 que la nappe 200 comparative est celle se conformant le moins à la forme du support.

Les tests de lacération ont été effectués sur chacun des matériaux assemblés avec une mousse en polyuréthane de 50 mm, ayant une masse volumique de 60 Kg/m³, et un revêtement extérieur en velours de 870 g/m², la face endroit comprenant les mailles endroits du renfort tricoté 20 étant orientée en regard du revêtement extérieur.

Le matériau de protection 10 selon l'invention présente une bonne souplesse, et une bonne résistance à la lacération tout en offrant une épaisseur réduite de 3 mm. De plus, ce matériau de protection 10 présente une résistance à la lacération similaire à celle de la nappe anti-vandalisme 200 alors qu'il a une masse surfacique divisé par 4 comparativement à ce dernier.

Ces bons résultats sont liés notamment à l'utilisation de fil(s) métallique(s) monofilamentaire(s) ayant un diamètre fin et au tricotage non serré.

La figure 2 représente en coupe un exemple de siège 300, notamment pour un moyen de transport collectif, par exemple un train, un bus, un métro ou un tramway, ledit siège 300 comprenant dans cet ordre un revêtement extérieur 320, ledit matériau selon l'invention 340 (par exemple le matériau de protection 10), et au moins une couche de mousse 360, le renfort métallique tricoté, par exemple le renfort métallique 20, comprend une face envers, en particulier comprenant des mailles envers, et une face endroit, en particulier comprenant des mailles endroits, et la face endroit du renfort métallique tricoté est orientée en regard du revêtement extérieur 320, et la face envers du renfort métallique est orientée en regard de ladite au moins une couche de mousse 360. La face endroit du renfort métallique tricoté est ainsi orientée en regard de l'amorce de la lacération. Le revêtement extérieur 320, le matériau 340 et la mousse 360 sont montés et solidarisés à un support 380.

## Revendications

1. Matériau de protection contre le vandalisme et contre le feu (10,340) comprenant une couche de renfort métallique (20) disposée entre une première couche barrière au feu de fibres non-tissées (30) et une seconde couche barrière au feu de fibres non-tissées (40), **caractérisé en ce que** la couche de renfort métallique (20) est un renfort métallique tricoté comprenant un ou des fil(s) métallique(s) monofilamentaire(s) ayant un diamètre inférieur ou égal à 0,25 mm.

2. Matériau de protection (10,340) selon la revendication 1, **caractérisé en ce que** ledit matériau de protection a une masse surfacique totale supérieure ou égale à 100 g/m² et inférieure ou égale à 600 g/m².

3. Matériau de protection (10,340) selon l'une ou l'autre des revendications 1 et 2, **caractérisé en ce que** le renfort métallique tricoté (20) comprend un ou plusieurs fil(s) métallique(s) monofilamentaire(s) ayant chacun un diamètre inférieur ou égal à 0,15 mm.

4. Matériau de protection (10,340) selon l'une quelconque des revendications 1 à 3, **caractérisé en ce que** le renfort métallique tricoté (20) a une masse surfacique supérieure ou égale à 30 g/m² et inférieure ou égale à 280 g/m², de préférence inférieur ou égal à 200 g/m².

5. Matériau de protection (10,340) selon l'une quelconque des revendications 1 à 4, **caractérisé en ce que** le renfort métallique tricoté (20) a un nombre de colonnes de mailles par 25,4 mm inférieur ou égal à 10.

6. Matériau de protection (10,340) selon la revendication 5, **caractérisé en ce que** le renfort métallique tricoté (20) a un nombre de colonnes de mailles par 25,4 mm supérieur ou égal à 2.

7. Matériau de protection (10,340) selon l'une quelconque des revendications 1 à 6, **caractérisé en ce que** le renfort métallique tricoté (20) comprend des mailles dont chacune comprend de un à trois fil(s) métallique(s) monofilamentaire(s).

8. Matériau de protection (10,340) selon l'une quelconque des revendications 1 à 7, **caractérisé en ce que** la première couche barrière au feu (30) comprend au moins 60% en masse de fibres non-tissées thermostables.

9. Matériau de protection (10,340) selon la revendication 8, **caractérisé en ce que** la première couche barrière au feu (30) comprend au moins 60% en masse, par rapport à la masse totale de ladite première couche barrière au feu (30), de fibres en aramide, notamment en méta-aramide.

10. Matériau de protection (10,340) selon l'une quelconque des revendications 1 à 9, **caractérisé en ce que** la première couche barrière au feu (10,340) a une masse volumique supérieure ou égale à 20 Kg/ m³ et inférieure ou égale à 100 Kg/m³.

11. Matériau de protection (10,340) selon l'une quelconque des revendications 1 à 10, **caractérisé en ce que** la première couche barrière au feu (30) comprend des fibres thermostables ayant une longueur supérieure ou égale à 35 mm et inférieure ou égale à 100 mm, et une masse linéique inférieure ou égale à 10 dtex.

12. Matériau de protection (10,340) selon l'une quelconque des revendications 1 à 11, **caractérisé en ce que** les première et seconde couches barrières au feu (30,40) sont chacune une nappe de fibres non-tissées comprenant au moins 70% en masse de fibres en aramide, ladite nappe ayant une masse surfacique supérieure ou égale à 60 g/m² et inférieure ou égale à 100 g/m², le renfort métallique tricoté (20) a une masse surfacique supérieure ou égale à 50 g/m² et inférieure ou égale à 120 g/m² et comprend au moins un fil métallique monofilamentaire ayant un diamètre inférieur ou égal à 0,25 mm, ledit renfort métallique tricoté (20) comprenant un nombre de colonnes de mailles inférieur ou égal à 8 par 25,4 mm.

13. Matériau de protection (10,340) selon l'une quelconque des revendications 1 à 12, **caractérisé en ce que** les première et seconde couches barrières au feu (30,40) sont solidarisées au renfort métallique tricoté (20) par au moins l'un des moyens suivants : par un agent adhésif, par un fil de liaison, en particulier ayant un numérométrique (Nm) allant de 15 à 40, par des fibres de la première couche barrière au feu (30) et/ou des fibres de la seconde couche barrière au feu (40) enchevêtrées dans ledit renfort métallique tricoté (20), pour former un matériau monolithique (10,340).

14. Procédé de fabrication d'un matériau de protection contre le vandalisme et contre le feu (10,340), notamment selon l'une quelconque des revendications 1 à 13, **caractérisé en ce qu'**il comprend les étapes :
- on dispose un renfort métallique tricoté (20) entre des première et secondes couches barrières au feu en fibres non-tissées (30,40), ledit renfort métallique tricoté (20) comprenant un ou des fil(s) métallique(s) monofilamentaire(s), le ou lesdits fil(s) métallique(s) monofilamentaire(s) ayant un diamètre inférieur ou égal à 0,25 mm;
- on solidarise les première et seconde couches barrières au feu (30,40) audit renfort métallique tricoté (20) avec au moins l'un des moyens suivants : un agent adhésif pulvérisé, un film hotmelt activé par chauffage, un fil de solidarisation cousu, par hydroliage, ou une combinaison de ces derniers.

15. Utilisation du matériau de protection contre le feu et contre le vandalisme (10,340) selon l'une quelconque des revendications 1 à 13 pour la fabrication d'un siège (300), notamment pour un moyen de transport collectif, **caractérisé en ce que** ledit siège (300) comprenant dans cet ordre : un revêtement extérieur (320), ledit matériau de protection contre le feu et contre le vandalisme (10,340), et au moins une couche de mousse (360), et **en ce que** ledit renfort métallique tricoté (20) dudit matériau de protection contre le feu et contre le vandalisme (10,340) comprend une face envers et une face endroit, et la face endroit du renfort métallique tricoté (20) est orientée en regard du revêtement extérieur (320), et la face envers du renfort métallique tricoté (20) est orientée en regard de ladite au moins une couche de mousse (360).
